(19) Europäisches Patentamt

European Patent Office

Office européen des brevets

(11) **EP 4 274 071 A1**

(12) **DEMANDE DE BREVET EUROPEEN**

(43) Date de publication:
**08.11.2023 Bulletin 2023/45**

(21) Numéro de dépôt: **23170984.1**

(22) Date de dépôt: **02.05.2023**

(51) Classification Internationale des Brevets (IPC):
***H02M 1/00*** *(2006.01)* ***H02M 3/00*** *(2006.01)*

(52) Classification Coopérative des Brevets (CPC):
**H02M 3/01; H02M 1/0058;** H02M 3/015

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **03.05.2022 FR 2204188**

(71) Demandeur: **Commissariat à l'énergie atomique et aux énergies alternatives 75015 Paris (FR)**

(72) Inventeurs:
• **MASSAVIE, Vincent**
**38054 GRENOBLE CEDEX 9 (FR)**
• **DESPESSE, Ghislain**
**38054 GRENOBLE CEDEX 9 (FR)**
• **MAYNARD, Xavier**
**38054 GRENOBLE CEDEX 9 (FR)**
• **CARCOUET, Sébastien**
**38054 GRENOBLE CEDEX 9 (FR)**

(74) Mandataire: **Lavoix**
**2, place d'Estienne d'Orves**
**75441 Paris Cedex 09 (FR)**

(54) **CONVERTISSEUR D'ÉNERGIE ÉLECTRIQUE ET SYSTÈME DE CONVERSION D'ÉNERGIE ÉLECTRIQUE ASSOCIÉ**

(57) L'invention concerne un convertisseur d'énergie électrique comportant un onduleur (10) permettant d'obtenir une énergie électrique alternative à partir d'une source d'énergie électrique continue. L'onduleur comporte un commutateur (52) comprenant des première et deuxième bornes de conduction destinées à recevoir une tension alternative, ledit convertisseur d'énergie électrique étant adapté à fournir une énergie électrique de sortie à une charge (8). Ce convertisseur comporte un circuit capacitif (14) de capacité variable et pilotable, connecté entre l'onduleur (10) et la charge (8), la commande d'une modification de ladite capacité permettant d'obtenir une modification d'un paramètre électrique de sortie du convertisseur. Le système de conversion d'énergie électrique associé comporte un tel convertisseur d'énergie électrique et un module de commande (16) configuré pour recevoir en entrée une valeur de consigne dudit paramètre électrique ($V_{ref}$) de sortie du convertisseur et pour commander la capacité variable dudit circuit capacitif (14) en fonction de cette valeur de consigne.

FIG.3

EP 4 274 071 A1

**Description**

La présente invention concerne un convertisseur d'énergie électrique et un système de conversion d'énergie électrique associé.

L'invention se situe de façon générale dans le domaine des dispositifs électriques, et plus particulièrement des convertisseurs d'énergie électrique du type convertisseur de puissance.

L'invention s'applique plus particulièrement aux convertisseurs de puissance adaptés à fonctionner à de hautes (2Mhz à 30 MHz) et très hautes fréquences (30MHz à 300MHz).

On connaît notamment des convertisseurs d'énergie électrique dits « continu vers alternatif », ou DC-AC (de l'anglais « *Direct Current-Alternative Current* »), également appelés onduleurs, adaptés à fonctionner à de hautes et très hautes fréquences (30MHz à 300MHz).

On connaît également des convertisseurs d'énergie électrique dits « continu-continu », ou DC-DC, par exemple intégrant un onduleur du type décrit ci-dessus et un convertisseur alternatif-continu, ou AC-DC, également connu sous le nom de redresseur.

En particulier, il existe plusieurs classes de convertisseurs d'énergie électrique comportant un commutateur, typiquement un transistor, comportant des première et deuxième bornes de conduction destinées à recevoir une tension alternative.

Un tel convertisseur d'énergie électrique est destiné à alimenter une charge d'impédance réelle ou complexe. Pour un bon fonctionnement du convertisseur, il est nécessaire de réaliser la commutation en fermeture du transistor à zéro de tension (en anglais « Zéro voltage switch »), i.e. lorsque la tension alternative aux bornes du transistor est sensiblement égale à zéro. Par sensiblement égal on entend ici à 1 0% près, de préférence à 5% près.

De manière classique, les composants du convertisseur et le rapport cyclique de commande du transistor sont réglés pour réaliser la fermeture du transistor à zéro de tension, pour une impédance de charge donnée. Dans ce cas, toute modification de l'impédance de la charge, postérieure au réglage, risque d'induire un rendement de conversion d'énergie électrique dégradé.

La demande de brevet FR 2106069 déposée le 9 juin 2021 propose un convertisseur de puissance comportant un bloc de régulation de la commutation permettant de réguler automatiquement le rapport cyclique de pilotage du transistor, et donc de s'adapter automatiquement à une modification de l'impédance de charge tout en assurant une commutation à zéro de tension.

Cependant, le convertisseur de puissance décrit dans la demande de brevet FR 2106069 est adapté à fonctionner pour une puissance et une amplitude de tension de sortie sensiblement fixes.

Plus généralement, les convertisseurs de puissance connus sont configurés pour fonctionner à tension ou puissance de sortie fixées, pour une charge à alimenter d'impédance variable ou fixe.

La présente invention a pour objet de pallier cet inconvénient en proposant un convertisseur d'énergie électrique dont un paramètre électrique de sortie, et notamment l'amplitude de tension de sortie, peut être régulé dans une plage de régulation.

A cet effet, l'invention propose, selon un aspect, un convertisseur d'énergie électrique comportant un onduleur permettant d'obtenir une énergie électrique alternative à partir d'une source d'énergie électrique continue, ledit onduleur comportant un commutateur comprenant des première et deuxième bornes de conduction destinées à recevoir une tension alternative, ledit convertisseur d'énergie électrique étant adapté à fournir une énergie électrique de sortie, à une charge ayant une impédance de charge. Ce convertisseur comporte un circuit capacitif de capacité variable et pilotable, connecté entre l'onduleur et la charge, la commande d'une modification de ladite capacité permettant d'obtenir une modification d'un paramètre électrique de sortie du convertisseur.

Avantageusement, le convertisseur d'énergie électrique selon l'invention comporte un circuit capacitif de capacité variable et commandable/pilotable, ce qui permet de réaliser, sur commande, la régulation d'un paramètre électrique de sortie du convertisseur.

Le convertisseur d'énergie électrique selon l'invention peut également présenter une ou plusieurs des caractéristiques ci-dessous, prises indépendamment ou selon toutes les combinaisons techniquement envisageables.

Le paramètre de sortie est une tension ou un courant ou une puissance de sortie du convertisseur.

Le convertisseur comporte un bloc d'adaptation d'impédance configuré pour adapter une impédance de sortie dudit onduleur à l'impédance de charge, ledit circuit capacitif de capacité variable étant connecté entre le bloc d'adaptation d'impédance et la charge à alimenter.

Le convertisseur comporte en outre un bloc redresseur permettant d'obtenir une énergie électrique continue à partir d'une source d'énergie électrique alternative, ledit bloc redresseur étant connecté entre le circuit capacitif de capacité variable et la charge à alimenter.

Le convertisseur comporte en outre un bloc de régulation configuré pour assurer une commutation du commutateur lorsque la tension entre lesdites première et deuxième bornes de conduction dudit commutateur est sensiblement nulle.

Le circuit capacitif comporte une pluralité de condensateurs disposés en parallèle, chaque condensateur étant connecté en série à un interrupteur associé, ledit condensateur étant connecté dans le circuit capacitif lorsque l'interrupteur associé est en position fermée, ledit condensateur étant déconnecté du circuit capacitif lorsque l'interrupteur associé est en position ouverte, la capacité variable dudit circuit capacitif, étant égale, à un instant donné, à la somme des capacités des condensateurs connectés dans le circuit capacitif audit instant donné.

Un premier desdits condensateurs a une capacité initiale, les autres condensateurs ayant chacun une capacité multiple de ladite capacité initiale.

Selon un autre aspect, l'invention a pour objet un système de conversion d'énergie électrique comprenant un convertisseur d'énergie électrique tel que brièvement décrit ci-dessus et un module électronique de commande du circuit capacitif de capacité variable, configuré pour recevoir en entrée une valeur de consigne dudit paramètre électrique de sortie du convertisseur et pour commander la capacité variable dudit circuit capacitif en fonction de ladite valeur de consigne.

Selon une variante, le module de commande comporte un soustracteur, configuré pour recevoir, sur une première entrée, une valeur dudit paramètre électrique de sortie du convertisseur, et pour recevoir, sur une deuxième entrée, la valeur de consigne dudit paramètre électrique, ledit soustracteur étant configuré pour calculer une différence entre la valeur du paramètre électrique de sortie du convertisseur et la valeur de consigne.

Selon une variante, le module de commande comporte en outre un module de conversion configuré pour transformer la différence calculée en un signal de commande du circuit capacitif.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 est une illustration schématique d'un système comprenant un convertisseur d'énergie électrique selon un premier mode de réalisation ;
[Fig 2] la figure 2 est une illustration schématique d'un système comprenant un convertisseur d'énergie électrique selon un deuxième mode de réalisation ;
[Fig 3] la figure 3 représente schématiquement un mode de réalisation d'un système électrique de conversion selon la figure 2 ;
[Fig 4] la figure 4 représente schématiquement et partiellement un deuxième mode de réalisation d'un module de commande d'un convertisseur d'énergie électrique ;
[Fig 5] la figure 5 est un graphe représentant un exemple d'évolution de la tension de sortie d'un convertisseur d'énergie électrique comportant un circuit capacitif selon l'invention.

Dans la description qui suit, le terme « sensiblement égal(e) » définit une relation d'égalité à plus ou moins 10%, de préférence à plus ou moins 5%.

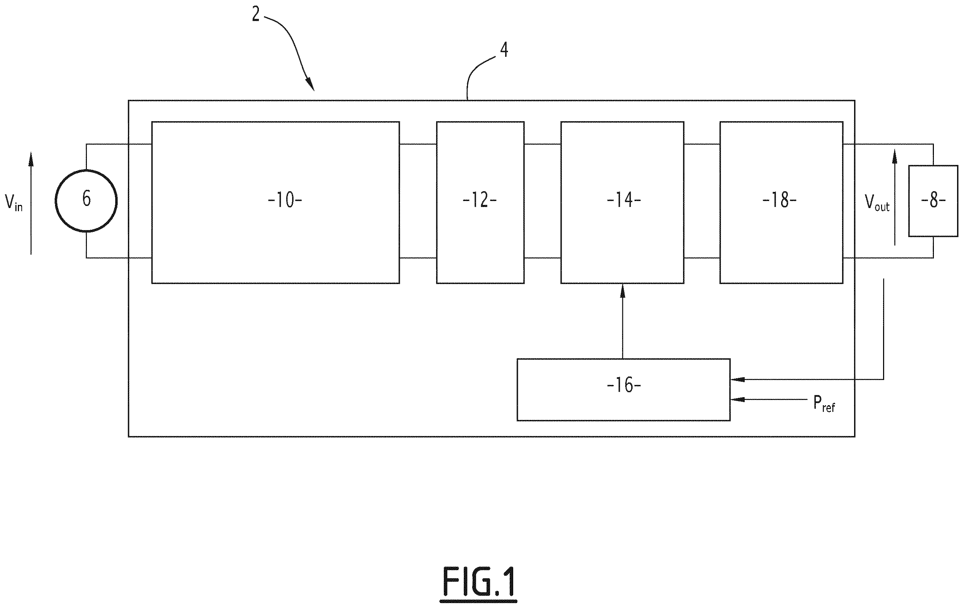

La **figure 1** représente schématiquement un système de conversion d'énergie électrique 2, comportant un convertisseur d'énergie électrique 4.

Le convertisseur d'énergie électrique 4 est par exemple un convertisseur de type continu-continu, appelé convertisseur DC-DC. Dans ce cas, le convertisseur 4 comprend un redresseur, comme décrit plus en détail ci-après.

Le système 2 comporte une source d'énergie électrique 6, fournissant une tension $V_{in}$ sensiblement continue. La source d'énergie 6 est par exemple une batterie ou un panneau solaire.

Le convertisseur d'énergie électrique 4 est alors configuré pour élever la valeur de la tension continue entre son entrée et sa sortie, et est alors également appelé convertisseur continu-continu élévateur ; ou bien est configuré pour abaisser la valeur de la tension continue entre son entrée et sa sortie, et est alors appelé convertisseur continu-continu abaisseur.

Le convertisseur d'énergie électrique 4 est configuré pour délivrer N tension(s) de sortie distincte(s), à partir de E tension(s) d'entrée distincte(s), E et N étant chacun un nombre entier supérieur ou égal à 1.

Dans l'exemple de la figure 1, le convertisseur d'énergie électrique 4 est configuré pour délivrer une tension de sortie, notée $V_{out}$, à partir de tension d'entrée, notée $V_{in}$, le nombre E de tension(s) d'entrée et le nombre N de tension(s) de sortie étant alors chacun égal à 1.

Le convertisseur d'énergie électrique 4 est connecté à une charge 8, d'impédance de charge, réelle ou complexe.

En variante non représentée, le convertisseur d'énergie électrique 4 est configuré pour délivrer plusieurs tensions de sortie distinctes à partir d'une ou plusieurs tensions d'entrée distinctes, le nombre N de tensions de sortie distinctes étant alors supérieur à 1.

En variante encore, le convertisseur d'énergie électrique 4 est configuré pour délivrer une ou plusieurs tensions de sortie distincte(s) à partir de plusieurs tensions d'entrée distinctes, le nombre E de tensions d'entrée distinctes étant alors supérieur à 1.

En variante encore, le convertisseur d'énergie électrique 4 est configuré pour délivrer plusieurs tensions de sortie distinctes à partir de plusieurs tensions d'entrée distinctes, les nombres E et N étant alors chacun supérieurs à 1.

Lorsque le convertisseur d'énergie électrique 4 est configuré pour délivrer plusieurs tensions de sortie distinctes, le convertisseur 4 est typiquement connecté à plusieurs charges 8.

Le convertisseur d'énergie électrique 4 comprend un bloc 10 de conversion continu-alternatif ou DC/AC, également connu sous le nom d'onduleur.

L'onduleur 10 est de préférence un onduleur du type à un commutateur, le commutateur étant par exemple un transistor, adapté à fonctionner en haute fréquence (HF) et en très haute fréquence (VHF), typiquement dans une gamme de fréquences allant de 2MHz à 300 MHz. Dans ce cas, le convertisseur d'énergie électrique 4 est un convertisseur VHF.

Le transistor est, par exemple, un transistor à effet de champ à grille isolée, également appelé MOSFET (de l'anglais *Metal Oxide Semiconductor Field Effect Transistor).* En variante, le transistor est un transistor bipolaire ; un transistor bipolaire à grille isolée, également appelé IGBT (de l'anglais *Insulated Gate Bipolar Transistor)* ; un transistor à base de silicium (Si), un transistor à base de GaN (de l'anglais *Gallium Nitride) ;* un transistor à base de carbure de silicium (SiC), ou un transistor à base de diamant, ou encore un thyristor.

L'onduleur 10 est par exemple du type comportant un élément piézoélectrique.

Plus généralement, le convertisseur d'énergie électrique 4 fonctionne de manière analogue avec plusieurs topologies d'onduleur, par exemple des onduleurs de classe E, de classe Phi2, de classe L-Piézo.

A titre d'exemple, la classe E est définie dans l'article de N. O. Sokal et A. D. Sokal, "Class E-A new class of high-efficiency tuned single-ended switching power amplifiers," publié dans IEEE Journal of Solid-State Circuits, vol. 10, no. 3, pp. 168-176, June 1975; la classe Phi2 est définie dans l'article de J. M. Rivas, Y. Han, O. Leitermann, A. Sagneri et D. J. Perreault, "A High-Frequency Resonant Inverter Topology with Low Voltage Stress,", publié dans 2007 IEEE Power Electronics Specialists Conférence, 2007, pp. 2705-2717; la classe L-Piézo est définie dans l'article de V. Massavie, G.Despesse, S. Carcouet et X. Maynard, "A new topology of resonant inverter including a piezoelectric component,", publié dans 2021 25rd European Conférence on Power Electronics and Applications (EPE'21 ECCE Europe), 2021, pp. 1-10.

Le convertisseur d'énergie électrique 4 comprend en outre, dans le mode de réalisation illustré, un bloc d'adaptation d'impédance 12, qui est configuré pour réaliser une adaptation entre l'impédance de la charge 8 et l'impédance de sortie de l'onduleur 10.

Par exemple le bloc d'adaptation d'impédance 12 est un circuit comprenant des composants passifs réels ou complexes. Plusieurs topologies de circuit d'adaptation d'impédance sont connues, par exemple une topologie en L comprenant des composants inductifs et capacitifs, agencés de manière à réaliser un filtrage passe bas ou passe haut ; une topologie en « pi » ou une topologie en T.

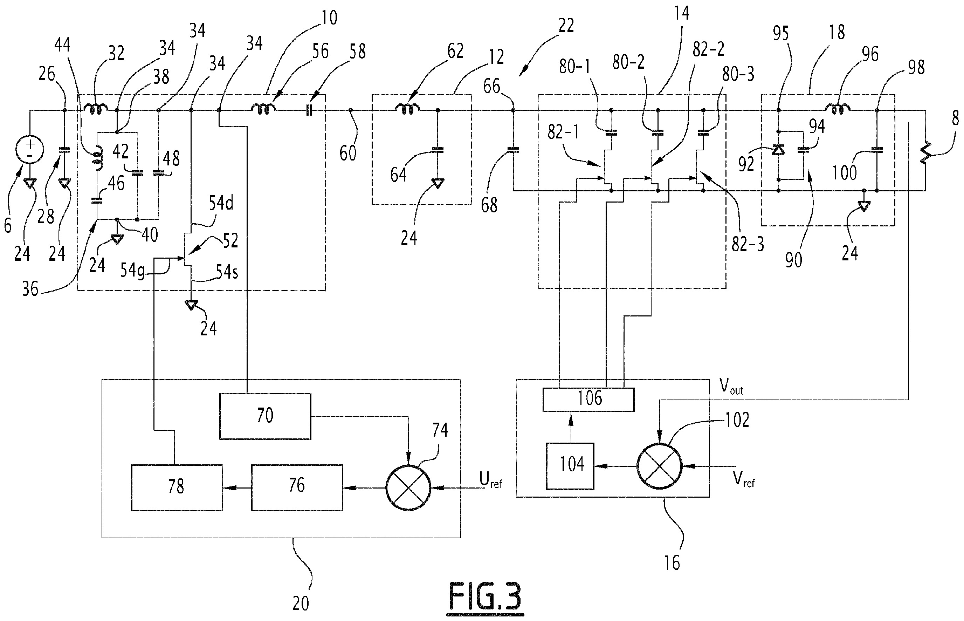

La figure 3, décrite plus en détail ci-après, illustre un mode de réalisation particulier dans lequel le bloc adaptateur d'impédance est formé d'un élément inductif, par exemple une bobine, et d'un condensateur (circuit LC), de topologie en L de type passe bas.

De plus, le convertisseur d'énergie électrique 4 comporte un circuit capacitif 14 de capacité variable, la variation de capacité étant commandable/pilotable par un module de commande 16, permettant avantageusement de faire varier un paramètre électrique de sortie du convertisseur d'énergie électrique en faisant varier la capacité du circuit capacitif 14. Le paramètre électrique de sortie du convertisseur d'énergie électrique 4 est par exemple une tension, un courant ou une puissance.

Le circuit capacitif 14 de capacité variable est connecté entre le bloc d'adaptation d'impédance 12 et la charge 8.

Lorsque le convertisseur d'énergie électrique 4 est configuré pour délivrer plusieurs tensions de sortie distinctes pour alimenter plusieurs charges 8, le convertisseur 4 comporte un circuit capacitif 14 de capacité variable pour chaque charge 8.

Dans le mode de réalisation illustré, le circuit capacitif 14 est connecté entre le bloc d'adaptation d'impédance 12 et un bloc redresseur 18, faisant également partie du convertisseur d'énergie électrique 4, dans le cas où les convertisseur d'énergie électrique 4 est un convertisseur DC-DC.

La variation du paramètre électrique de sortie est réalisée en appliquant en entrée du module de commande 16 une valeur de paramètre électrique de consigne $P_{ref}$, par exemple une tension de consigne $V_{ref}$, ou un courant de consigne $I_{ref}$, ou une puissance de consigne $P_{ref}$.

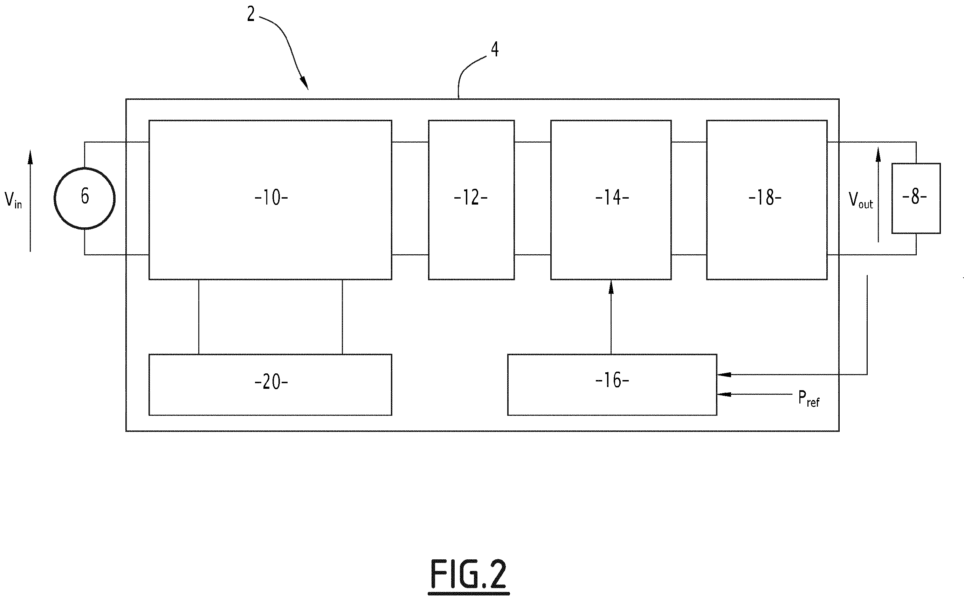

Dans un autre mode de réalisation, illustré à la **figure 2,** le système de conversion d'énergie électrique 2 comporte un convertisseur 4, qui comporte, en plus des éléments décrits ci-dessus qui sont référencés par les mêmes numéros, un bloc de régulation 20, qui est configuré pour assurer une commutation à tension sensiblement nulle ou ZVS (pour « zéro voltage switch » en anglais) du commutateur (e.g. transistor) de l'onduleur 10.

En effet, avantageusement, la commutation à tension sensiblement nulle entraîne peu de perturbations de l'onduleur 10 et engendre de faibles pertes énergétiques au niveau du commutateur de l'onduleur.

Par exemple, dans un mode de réalisation, le bloc de régulation est du type de celui décrit dans la demande de brevet FR2106069, configuré pour réaliser une commutation à tension sensiblement nulle (commutation ZVS).

La **figure 3** illustre un exemple de système de conversion d'énergie électrique 22 dont les éléments sont décrits en détail ci-après.

Dans cet exemple particulier, le paramètre électrique de sortie régulé est la tension.

Le système de conversion d'énergie électrique 22 comporte une source d'énergie électrique 6, fournissant une tension $V_{in}$ sensiblement continue, comportant une borne négative (notée -) connectée à un noeud 24. Le noeud 24 est un noeud d'application d'un potentiel de référence, par exemple la masse. La source d'énergie 6 comporte également une borne positive (notée +), connectée à un noeud 26 d'entrée de l'onduleur 10.

Le noeud 26 est également connecté à une borne d'un condensateur optionnel 28 de capacité $C_{in}$ donnée, qui lisse la tension d'entrée, l'autre borne du condensateur 28 étant connectée à un noeud 24 d'application du potentiel de référence.

L'ensemble formé par la source d'énergie référencée 6 et le condensateur 28 forme, dans le mode de réalisation illustré, une source d'énergie électrique.

Dans le mode de réalisation illustré à la figure 3, l'onduleur 10 est un onduleur de type L-piézo.

L'onduleur 10 comprend un élément inductif, par exemple une bobine 32, une borne de la bobine 32 étant connectée au noeud 26 d'entrée de l'onduleur, l'autre borne étant connectée à un noeud 34.

L'élément piézoélectrique 36 est connecté entre le noeud 34 et un noeud 24 d'application du potentiel de référence.

Dans le mode de réalisation illustré, l'élément piézoélectrique 36 est modélisé sous la forme de deux branches connectées en parallèle entre deux bornes (ou électrodes) 38 et 40, la borne 38 étant connectée au noeud 34 et la borne 40 étant connectée au noeud 24, l'une des branches comportant un condensateur 42, l'autre branche, appelée branche résonante, comportant un circuit LC formé d'un élément inductif, par exemple une bobine 44, connecté en série avec un condensateur 46.

Le terme branche désigne une partie de circuit électrique située entre deux noeuds consécutifs, les éléments d'une branche étant connectés en série.

La capacité du condensateur 42 connecté en parallèle de la branche résonante est appelée capacité parallèle, ou capacité bloquée, ou encore capacité de référence, et notée $C_0$. La tension aux bornes de l'élément piézoélectrique 36 correspond alors typiquement à la tension aux bornes du condensateur 42.

L'onduleur 10 comprend en option un condensateur 48, de capacité Cr, une borne du condensateur 48 étant connectée au noeud 34, l'autre borne du condensateur 48 étant connectée au noeud 24 d'application du potentiel de référence. La capacité Cr est une capacité dite de réglage.

Le commutateur 52 est par exemple un transistor de puissance à effet de champ ou FET (de l'anglais « Field Effect Transistor »), par exemple un transistor MOSFET (de l'anglais *Metal Oxide Semiconductor Field Effect Transistor).*

En variante, le transistor est un transistor bipolaire ; un transistor bipolaire à grille isolée, également appelé IGBT (de l'anglais *Insulated Gate Bipolar Transistor)* ; un transistor à base de silicium (Si), un transistor à base de nitrure de gallium ou GaN (de l'anglais *Gallium Nitride*) ; un transistor à base de carbure de silicium (SiC), ou un transistor à base de diamant, ou encore un thyristor.

Selon une autre variante, le transistor est un transistor à haute mobilité électronique HEMT (de l'anglais « High Electron Mobility Transistor »), par exemple à base de nitrure de gallium GaN.

Le commutateur 52 comporte une première borne 54d de conduction (drain), reliée au noeud 34, une deuxième borne 54s de conduction (source) connectée au noeud 24 d'application du potentiel de référence, et une troisième borne 54g de commande (grille).

La tension de commande Vgs a pour effet de commander la commutation du commutateur 52 entre un état fermé (ou passant) et un état ouvert (ou bloqué). Lorsque la tension Vgs est supérieure ou égale à une tension de seuil, le commutateur 52 est dans l'état passant, et lorsque la tension Vgs est inférieure à la tension de seuil, le commutateur 52 est dans l'état bloqué.

A titre d'exemple, le commutateur 52 de l'onduleur 10 présente une fréquence de commutation comprise entre 2MHz et 300MHz.

La tension de commande Vgs est fournie par le bloc de régulation 20, dans le but d'assurer une commutation de fermeture du commutateur 52 lorsque la tension Vds entre la première borne 54d (respectivement noeud 34) et la deuxième borne 54s du commutateur est sensiblement nulle.

L'onduleur 10 comporte en outre un autre élément inductif 56, par exemple une bobine, d'inductance Ls, en série avec un condensateur 58, de capacité Cs, entre le noeud 34 et une borne 60 de sortie de l'onduleur.

Une tension sinusoïdale $V_{ch}$ est obtenue en sortie de l'onduleur 10.

Le bloc d'adaptation d'impédance 12 comporte, dans le mode de réalisation de la figure 3, un élément inductif, par exemple une bobine 62 d'inductance $L_a$, connectée entre la borne 60 de sortie de l'onduleur et une borne 66 de sortie du bloc d'adaptation d'impédance, et un condensateur 64, de capacité Ca, connecté en la borne 66 et le noeud 24 d'application du potentiel de référence.

Ainsi, dans ce mode de réalisation, le bloc d'adaptation d'impédance a une topologie en L.

Le convertisseur d'énergie électrique 22 comporte en outre un bloc de régulation 20, qui comporte, dans ce mode de réalisation, un bloc 70 de détection d'une valeur minimale de la tension Vds et de moyennage de cette tension sur plusieurs alternances, permettant d'obtenir une moyenne $V_\alpha$. Le bloc 70 est connecté entre le noeud 34, connecté à la borne 54d du commutateur 52, et une entrée d'un soustracteur 74.

Le soustracteur 74 comporte une première entrée (+) reliée au bloc 70 et une deuxième entrée (-) recevant un potentiel de référence $U_{ref}$. Le soustracteur 74 effectue une différence entre la première et la deuxième entrée.

Ainsi, le soustracteur 74 compare la tension moyenne $V_\alpha$ au potentiel de référence $U_{ref}$, le potentiel de référence étant ajusté pour obtenir un fonctionnement quasi ZVS.

Un signal image d'un écart entre $V_\alpha$ et $U_{ref}$ est fourni en sortie du soustracteur.

La sortie du soustracteur 74 est connectée en entrée d'un correcteur 76, le correcteur 76 étant, dans un mode de réalisation, un correcteur proportionnel intégral. Le correcteur 76 permet d'obtenir une boucle de régulation plus stable que si le circuit 20 était dépourvu de correcteur.

La sortie du correcteur 76 est fournie en entrée d'un circuit 78 de modulation de largeur d'impulsion ou PWM (de l'anglais « Pulse Width Modulation »), qui est connecté à la grille du transistor 52 pour fournie le signal de commande de tension Vgs, qui pilote la commutation du transistor 52. Ainsi, les instants de fermeture et d'ouverture du transistor 52 sont pilotés par le signal issu du circuit PWM 78, piloté lui-même par le correcteur 76, qui fournit une tension continue image d'un rapport cyclique à appliquer. Ce signal est communément appelé « rapport cyclique ».

Dans le mode de réalisation de la figure 3, le convertisseur 22 comprend en outre, en sortie du bloc d'adaptation d'impédance 12, un condensateur 68 connecté entre la borne de sortie 66 et le nœud 24 d'application du potentiel de référence, de capacité prédéterminée (capacité fixe), ainsi qu'un circuit capacitif 14 de capacité variable, commandé par un module de commande 16.

Dans le mode de réalisation de la figure 3, le circuit capacitif 14 comporte P=3 composants capacitifs, e.g. des condensateurs 80-1, 80-2 et 80-3 connectés en parallèle, de capacités respectives Cvar_1, Cvar_2, Cvar_3.

Le nombre P de condensateurs dans le circuit capacitif est un nombre entier choisi.

Chacun des condensateurs est connecté à un interrupteur 82-1, 82-2, 82-3 associé, par exemple un transistor.

Plus généralement, on désignera par 80-i l'un quelconque des condensateurs du circuit capacitif, et par 82-i l'interrupteur associé.

A noter qu'une capacité 80-i peut être constituée d'une association quelconque en série et/ou parallèle de capacités élémentaires. Cela peut être utile pour obtenir des rapports de capacité précis entre 2 capacités 80-i. Par exemple pour obtenir une capacité 80-3 égale à 2 fois la capacités 80-2 elle-même égale à deux fois la capacité 80-1, il est possible d'utiliser une même référence de capacité et d'en utiliser 2 en parallèle pour 80-3, une seule pour 80-2 et deux en série pour 80-1. Ainsi, en utilisant la même référence, les caractéristiques et dérivent en température seront similaires.

La capacité variable Cvar du circuit capacitif 14 est, à un instant donné, égale à la somme des capacités des condensateurs connectés dans le circuit capacitif 14.

Un condensateur 80-i est connecté dans le circuit capacitif 14 lorsque l'interrupteur 82-i auquel il est connecté, également appelé interrupteur associé, est fermé, ce qui permet de laisser passer le courant électrique. Lorsque l'interrupteur associé est ouvert, le condensateur 80-i est déconnecté, et sa capacité Cvar_i ne contribue pas à la capacité totale du circuit capacitif.

Ainsi, en contrôlant l'ouverture et la fermeture des interrupteurs associés aux condensateurs, et par conséquent en connectant et déconnectant les condensateurs associés dans le circuit capacitif, il est possible de faire varier la capacité Cvar du circuit capacitif.

Dans le mode de réalisation illustré il est possible de connecter/déconnecter individuellement chaque condensateur, par application d'un signal de commande sur la grille du transistor associé. Ainsi, toutes les combinaisons d'ouverture/fermeture des transistors sont envisageables, ce qui permet d'atteindre un ensemble de valeurs de capacité Cvar.

Par exemple, lorsque le circuit capacitif comporte 3 condensateurs, 8 combinaisons sont envisageables.

Dans un mode de réalisation, les condensateurs 80-1 à 80-P (où P=3 dans l'exemple de la figure 3) ont des valeurs de capacités différentes, par exemple croissantes et suivant une progression géométrique (ou suite géométrique) de raison R, par exemple R=2.

A titre d'exemple non limitatif, Cvar_1=C, Cvar_2=2C, Cvar_3=4C, et plus généralement Cvar_p=$2^{p-1}$C. Par exemple, la valeur de capacité C, dite capacité initiale, est égale à 120pF.

Dans le cas où le circuit capacitif comporte P condensateurs en parallèle, de capacités de valeurs croissantes de valeurs C, 2C, 4C,..., $2^{P-1}$C, la commande des interrupteurs associés permet d'obtenir des valeurs de capacité Cvar totale (capacité variable du circuit capacitif) allant de 0 à Cvar_max=$(2^P-1)$C.

Le nombre de paliers de valeurs de capacité est de $2^P$ dans ce cas.

Ainsi, la capacité Cvar totale s'écrit mathématiquement sous la forme :

$$Cvar = \sum_{i=1}^{P} K_i Cvar\_i$$

Où $K_i$ représente l'état de l'interrupteur associé au condensateur de capacité Cvar_i, $K_i$=0 si l'interrupteur est ouvert, et $K_i$=1 si l'interrupteur est fermé.

Comme indiqué ci-dessus, dans un mode de réalisation, les interrupteurs 82-1 à 82-P sont des transistors.

Par exemple, chaque interrupteurs 82-i est un transistor de puissance à effet de champ ou FET (de l'anglais « *Field Effect Transistor* »), par exemple un transistor MOSFET (de l'anglais *Metal Oxide Semiconductor Field Effect Transistor*).

En variante, le transistor est un transistor bipolaire ; un transistor bipolaire à grille isolée, également appelé IGBT (de l'anglais *Insulated Gate Bipolar Transistor)*; un transistor à base de silicium (Si), un transistor à base de nitrure de gallium ou GaN (de l'anglais *Gallium Nitride)* ; un transistor à base de carbure de silicium (SiC), ou un transistor à base de diamant, ou encore un thyristor.

Selon une autre variante, le transistor est un transistor à haute mobilité électronique HEMT (de l'anglais « *High Electron Mobility Transistor* »), par exemple à base de nitrure de gallium GaN.

Chaque transistor 82-i comporte une première borne 84d-i de conduction (drain) connectée à un nœud 86-i, une deuxième borne 84s-i de conduction (source) connectée au nœud 24 d'application du potentiel de référence, et une troisième borne 84g-i de commande (grille).

La tension de commande Vgs-i (tension grille source entre la troisième borne et la deuxième borne) a pour effet de commander la commutation du transistor 82-i entre un état passant et un état bloqué. Lorsque la tension Vgs-i est supérieure ou égale à une tension de seuil du transistor, le transistor 82-i est dans l'état passant, et lorsque la tension Vgs-i est inférieure à la tension de seuil, le transistor 82-i est dans l'état bloqué.

Deux modes de réalisation du module de commande 16 des tensions respectives de commande de commutation des transistors 82-1 à 82-P seront décrits ci-après.

Dans le mode de réalisation de la figure 3, le convertisseur 22 comporte également un redresseur 18 de classe E, qui a pour fonction de redresser la tension sinusoïdale fournie par l'onduleur 10 pour obtenir une tension de sortie continue.

Dans ce mode de réalisation, le bloc redresseur 18 comporte un bloc 90 comportant une diode 92 connectée en parallèle d'un condensateur 94, le bloc 90 étant connecté entre un noeud 95 d'entrée du redresseur et le noeud 24 d'application du potentiel de référence, un élément inductif, par exemple une bobine 96 connecté entre le noeud 95 et un noeud 98 de sortie du redresseur 18, ainsi qu'un condensateur 100, qui est un condensateur de sortie de capacité $C_{out}$ connecté entre le noeud 98 et le noeud 24 d'application du potentiel de référence.

La tension de sortie est fournie à une charge 8.

Une image de la tension de sortie $V_{out}$ est fournie en entrée du module 16 de commande du circuit capacitif de capacité variable.

Dans un mode de réalisation, le module 16 comporte un soustracteur 102, qui comporte une première entrée (+) sur laquelle est reçue la tension de sortie $V_{out}$ et une deuxième entrée (-) sur laquelle est fourni une tension de consigne $V_{ref}$.

Dans d'autres modes de réalisation, un autre paramètre électrique est régulé en sortie, et une valeur de consigne du paramètre électrique régulé est fournie.

Le paramètre électrique régulé est par exemple le courant, et une valeur de courant de sortie est fournie sur la première entrée du soustracteur 102, et une valeur de courant de consigne est fournie sur la deuxième entrée du soustracteur 102.

Selon une variante, le paramètre régulé est la puissance, une valeur de tension de sortie et une valeur de courant de sortie sont obtenues et multipliées pour obtenir une valeur de puissance de sortie fournie sur la première entrée du soustracteur 102, et une valeur de puissance de consigne $P_{ref}$ est fournie sur la deuxième entrée du soustracteur 102.

Dans le mode de réalisation de la figure 3, le soustracteur 102 fournit en sortie une image d'un écart entre la tension $V_{out}$ et la tension de consigne $V_{ref}$, qui est fournie en entrée d'un correcteur 104 de type proportionnel, intégral (PI) ou proportionnel, intégral, dérivé (PID), ou un autre type de correcteur qui délivre un signal de commande.

Le signal est alors fourni à un convertisseur analogique numérique 106 qui convertit le signal de commande en un signal numérique dont les bits adresse chaque interrupteur 82-i.

Par exemple, dans un mode de réalisation, le correcteur 104 fournit une tension continue image de la différence entre la tension $V_{out}$ et la tension $V_{ref}$. La valeur de tension continue est convertie en valeur numérique par le convertisseur 106, par exemple codée sur 3 bits. Chaque bit commande un des interrupteurs 82-1, 82-2, 82-3, le bit de poids faible commandant l'interrupteur relié à la capacité la plus faible, et ainsi de suite.

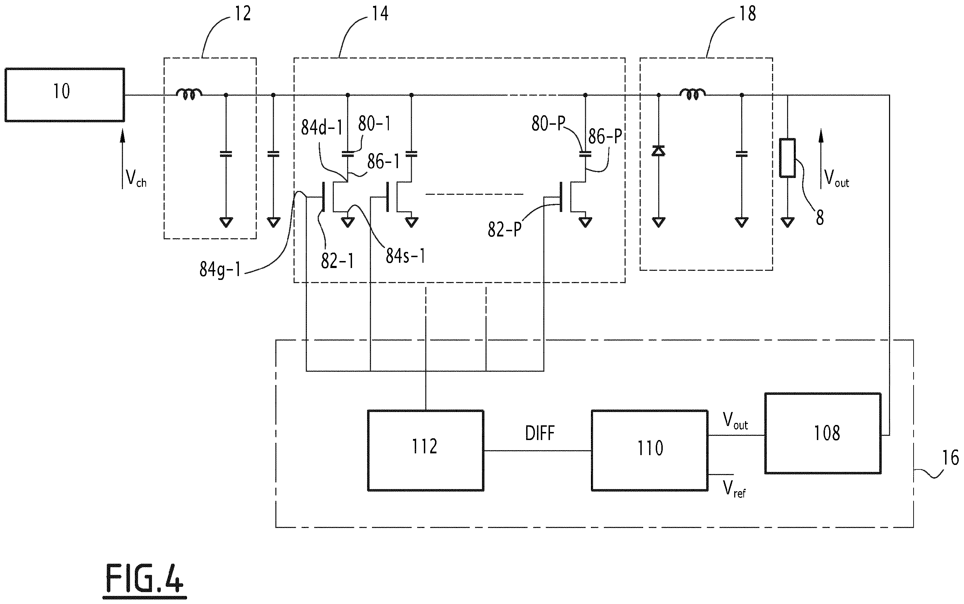

La **figure 4** est une illustration schématique partielle d'un autre mode de réalisation de l'invention. L'onduleur 10 n'est pas représenté, et le bloc d'adaptation d'impédance a une architecture similaire à celle décrite en référence à la figure 3. Le bloc redresseur 18 est simplifié par rapport à celui décrit en référence à la figure 3.

Dans ce mode de réalisation, le circuit capacitif 14 comporte P condensateurs, et des interrupteurs 82-1 à 82-P associés.

Le module de commande 16 est dans ce mode de réalisation un module électronique de commande numérique, par exemple un microcontrôleur, comportant un convertisseur analogique numérique 108 qui reçoit en entrée la tension de sortie $V_{out}$, qu'il convertit en valeur numérique.

Le module électronique de commande numérique est soit intégré au convertisseur d'énergie électrique, soit externe au convertisseur d'énergie électrique.

Le module électronique de commande numérique 16 comporte également un module soustracteur 110, qui effectue une soustraction entre la valeur de tension numérisée et la valeur de tension de consigne $V_{ref}$.

La différence DIFF entre ces deux valeurs est fournie en entrée d'un correcteur 112, par exemple un correcteur PID, qui fournit en sortie les valeurs de tension de commande de chacun des interrupteurs 82-1 à 82-P.

La valeur donnée par le module 112 étant une valeur numérique, qui est codée sur P bits, chaque bit commande un des interrupteurs, le bit de poids faible commandant l'interrupteur relié à la capacité la plus faible, et ainsi de suite.

Alternativement, un autre paramètre électrique de sortie par exemple le courant de sortie ou la puissance de sortie, ainsi qu'une valeur de consigne de ce paramètre électrique, sont fournis au module électronique de commande numérique.

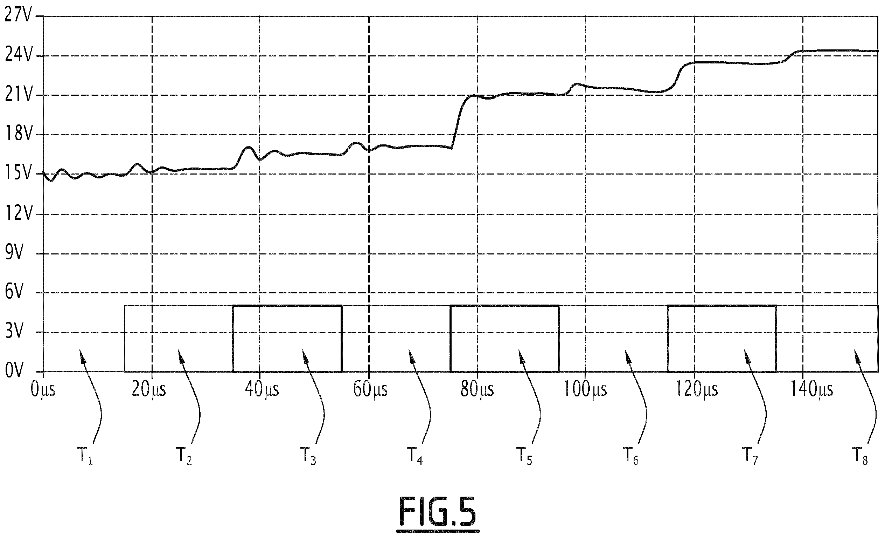

La **figure 5** est un graphique illustrant la tension de sortie $V_{out}$ en fonction du temps, obtenue en fonction des connexions/déconnexions des condensateurs du circuit capacitif de la figure 3, via la fermeture/ouverture des interrupteurs associés.

Le graphe de la figure 5 est obtenu par simulation de connexion/déconnexion dans le temps, comme indique au-dessus de l'axe des abscisses.

Durant une première période T1, les interrupteurs sont ouverts.

Durant une deuxième période T2, le premier condensateur de capacité Cvar_1 est connecté dans le circuit capacitif, la capacité du circuit capacitif est égale à Cvar_1.

Durant une troisième période T3, le premier condensateur de capacité Cvar_1 est déconnecté et le deuxième condensateur de capacité Cvar_2 est connecté dans le circuit capacitif, la capacité du circuit capacitif est égale à Cvar_2.

Durant une quatrième période T4, les premier condensateur de capacité Cvar_1 et deuxième condensateur de capacité Cvar_2 sont connectés dans le circuit capacitif, la capacité du circuit capacitif est égale à Cvar_1+Cvar_2.

Durant une cinquième période T5, les premier condensateur de capacité Cvar_1 et deuxième condensateur de capacité Cvar_2 sont déconnectés et le troisième condensateur de capacité Cvar_3 est connecté dans le circuit capacitif, la capacité du circuit capacitif est égale à Cvar_3.

Durant une sixième période T6, les premier condensateur de capacité Cvar_1 et troisième condensateur de capacité Cvar_3 sont connectés dans le circuit capacitif, le deuxième condensateur de capacité Cvar_2 étant déconnecté, la capacité du circuit capacitif est égale à Cvar_1 +Cvar_3.

Durant une septième période T7, le premier condensateur de capacité Cvar_1 est déconnecté et les deuxième condensateur de capacité Cvar_2 et troisième condensateur de capacité Cvar_3 sont connectés dans le circuit capacitif, la capacité du circuit capacitif est égale à Cvar_2+Cvar_3.

Durant une huitième période T8, les premier, deuxième et troisième condensateurs sont connectés, la capacité totale étant égal à Cvar_1 +Cvar_2+Cvar_3.

Les huit périodes successives correspondent à des paliers de valeurs croissantes de tension de sortie, s'étendant dans cet exemple de 14,9V à 25,7 V, soit une variation de 10,8 V.

Dans cet exemple la capacité initiale Cvar_1=C=120pF, Cvar_2=2C=240pF et Cvar_3=4C=480pF.

Les paliers successifs correspondent à des valeurs de capacité variable Cvar allant de 0pF pour la première période T1 à 840 pF dans la huitième période T8, par incréments de 120pF par période, i.e. 120pF pour la deuxième période, 240 pF pour la troisième période etc.

Ce mode de réalisation de l'invention est particulièrement avantageux, car le nombre de condensateurs est modulable et permet d'obtenir une variation par paliers également modulables.

Avantageusement, pour obtenir une granularité fine dans la variation des valeurs de tension de sortie, la valeur de capacité C (capacité initiale) est une petite valeur, par exemple de l'ordre de 5 pF à 120 pF.

Ainsi, dans le mode de réalisation décrit, les capacités variables des condensateurs du circuit capacitif sont : 0, C, 2C, 4C,8C,....$2^{P-1}$C, ce qui permet d'obtenir des valeurs de Cvar allant de 0 à Cvar_max=($2^P$-1)C par incréments de C.

Par exemple, dans un cas d'application, un cahier des charges définissant une plage de régulation de la tension de sortie, entre une tension minimale et une tension maximale.

La tension minimale permet de calculer la capacité du condensateur 68, et la tension maximale indique la capacité Cvar_max, égale à la somme de toutes les capacités des condensateurs du circuit capacitif. Cela permet alors de choisir la capacité initiale C et/ou le nombre de condensateurs.

L'invention a été décrite ci-dessus dans un mode de réalisation dans lequel le circuit capacitif à capacité variable est réalisé par la mise en parallèle d'une pluralité de condensateurs.

Dans des variantes, le circuit capacitif comporte d'autres types de composants capacitifs de capacité variable pilotable. Par exemple, le circuit capacitif comporte un condensateur variable (ou varicap) de capacité allant de 100pF à 200pF, ce qui permet une variation continue de la tension de sortie, et plus généralement du paramètre électrique de sortie choisi, sur la plage de régulation atteignable en fonction de la plage de variation de la capacité.

Selon un autre mode de réalisation, le circuit capacitif comporte un ou plusieurs condensateurs réglables MEMS (de l'anglais « Micro Electro Mechanical System »).

Le convertisseur du mode de réalisation décrit en détail comporte un onduleur L-piézo et un redresseur de classe E.

Néanmoins, il est clair pour un homme du métier que l'invention s'applique avec d'autres topologies d'onduleurs, par exemple des onduleurs de classe E, de classe Phi2.

De même, l'invention s'applique avec d'autres topologies de redresseurs, par exemple les redresseurs de classe DE.

Selon une autre alternative, l'invention s'applique également dans des convertisseurs DC-AC, pour alimenter une charge alternative sans redressement. Dans ce cas, le paramètre électrique régulé est l'amplitude de la tension de sortie, ou du courant de sortie ou de la puissance de sortie du convertisseur.

Avantageusement, l'invention trouve une application dans de nombreuses applications nécessitant une tension de sortie régulée, ou un courant de sortie régulé ou une puissance de sortie régulée.

Par exemple, l'invention trouve une application dans les systèmes d'alimentation en énergie électrique de circuits électroniques à partir d'une batterie ou d'un bus d'alimentation.

**Revendications**

1. Convertisseur d'énergie électrique comportant un onduleur (10) permettant d'obtenir une énergie électrique alternative à partir d'une source d'énergie électrique continue, ledit onduleur (10) comportant un commutateur (52) comprenant des première et deuxième bornes de conduction destinées à recevoir une tension alternative, ledit convertisseur d'énergie électrique étant adapté à fournir une énergie électrique de sortie, à une charge (8) ayant une impédance de charge, ledit convertisseur étant **caractérisé en ce qu'**il comporte un circuit capacitif (14) de capacité variable et pilotable, connecté entre l'onduleur (10) et la charge (8), la commande d'une modification de ladite capacité permettant d'obtenir une modification d'un paramètre électrique de sortie du convertisseur.

2. Convertisseur selon la revendication 1, dans lequel ledit paramètre de sortie est une tension ou un courant ou une puissance de sortie du convertisseur.

3. Convertisseur selon l'une des revendications 1 ou 2, comportant un bloc d'adaptation d'impédance (12) configuré pour adapter une impédance de sortie dudit onduleur (10) à l'impédance de charge, ledit circuit capacitif (14) de capacité variable étant connecté entre le bloc d'adaptation d'impédance (12) et la charge (8) à alimenter.

4. Convertisseur selon la revendication 3, comportant en outre un bloc redresseur (18) permettant d'obtenir une énergie électrique continue à partir d'une source d'énergie électrique alternative, ledit bloc redresseur (18) étant connecté entre le circuit capacitif (14) de capacité variable et la charge à alimenter (8).

5. Convertisseur selon l'une des revendications 1 à 4, comportant en outre un bloc de régulation (20) configuré pour assurer une commutation du commutateur (52) lorsque la tension entre lesdites première et deuxième bornes de conduction dudit commutateur (52) est sensiblement nulle.

6. Convertisseur selon l'une des revendications 1 à 5, dans lequel le circuit capacitif (14) comporte une pluralité de condensateurs (80-1,80-2, 80-3,...,80-P) disposés en parallèle, chaque condensateur (80-1,80-2, 80-3,...,80-P) étant connecté en série à un interrupteur (82-1,82-2, 82-3,...,82-P) associé, ledit condensateur (80-1,80-2, 80-3,...,80-P) étant connecté dans le circuit capacitif (14) lorsque l'interrupteur (82-1,82-2, 82-3,...,82-P) associé est en position fermée, ledit condensateur (80-1,80-2, 80-3,...,80-P) étant déconnecté du circuit capacitif (14) lorsque l'interrupteur (82-1,82-2, 82-3,...,82-P) associé est en position ouverte, la capacité variable dudit circuit capacitif (14), étant égale, à un instant donné, à la somme des capacités des condensateurs connectés dans le circuit capacitif (14) audit instant donné.

7. Convertisseur selon la revendication 6, dans lequel un premier desdits condensateurs (80-1) a une capacité initiale, les autres condensateurs (80-2, 80-3,...,80-P) ayant chacun une capacité multiple de ladite capacité initiale.

8. Système de conversion d'énergie électrique comportant un convertisseur d'énergie électrique selon l'une des revendications 1 à 7 et un module de commande (16) configuré pour recevoir en entrée une valeur de consigne dudit paramètre électrique ($P_{ref}$, $I_{ref}$ ou $V_{ref}$) de sortie du convertisseur et pour commander la capacité variable dudit circuit capacitif (14) en fonction de ladite valeur de consigne ($P_{ref}$, $I_{ref}$ ou $V_{ref}$).

9. Système de conversion d'énergie électrique selon la revendication 8 dans lequel ledit module de commande (16) comporte un soustracteur (102, 110), configuré pour recevoir, sur une première entrée, une valeur dudit paramètre électrique de sortie du convertisseur, et pour recevoir, sur une deuxième entrée, la valeur de consigne dudit paramètre électrique, ledit soustracteur (102, 110) étant configuré pour calculer une différence entre la valeur du paramètre électrique de sortie du convertisseur et la valeur de consigne.

10. Système de conversion d'énergie électrique selon la revendication 9, dans lequel ledit module de commande (16) comporte en outre un module de conversion (104,112) configuré pour transformer la différence calculée en un signal de commande du circuit capacitif.

FIG.1

EP 4 274 071 A1

FIG.2

FIG.3

FIG.4

EP 4 274 071 A1

FIG.5

Europäisches
Patentamt

European
Patent Office

Office européen
des brevets

**RAPPORT DE RECHERCHE EUROPEENNE**

Numéro de la demande

**EP 23 17 0984**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WEN-JIAN GU ET AL: "A NEW METHOD TO REGULATE RESONANT CONVERTERS", IEEE TRANSACTIONS ON POWER ELECTRONICS, INSTITUTE OF ELECTRICAL AND ELECTRONICS ENGINEERS, USA, vol. 3, no. 4, 1 octobre 1988 (1988-10-01), pages 430-439, XP000026938, ISSN: 0885-8993, DOI: 10.1109/63.17964 * abrégé * * sections I-VI; figures 2, 3, 5-13 * ----- | 1-10 | INV. H02M1/00 H02M3/00 |
| X | HARADA KOOSUKE ET AL: "Controlled resonant converters with switching frequency fixed", PROCEEDINGS OF THE ANNUAL POWER ELECTRONICS SPECIALISTS CONFERENCE. (PESC). BLACKSBURG, JUNE 22 - 26, 1987; [PROCEEDINGS OF THE ANNUAL POWER ELECTRONICS SPECIALISTS CONFERENCE. (PESC)], NEW YORK, IEEE, US, 21 juin 1987 (1987-06-21), pages 431-438, XP032756677, ISSN: 0275-9306, DOI: 10.1109/PESC.1987.7077212 ISBN: 978-99963-23-27-0 [extrait le 2015-04-01] * abrégé * * sections 1-6; figures 1-15 * ----- | 1-10 | DOMAINES TECHNIQUES RECHERCHES (IPC) H02M |
| A | US 2022/038030 A1 (MAKHOUL RAWAD [FR] ET AL) 3 février 2022 (2022-02-03) * abrégé * * alinéa [0024] – alinéa [0025]; figure 2 * ----- | 1-10 | |

-/--

Le présent rapport a été établi pour toutes les revendications

| Lieu de la recherche | Date d'achèvement de la recherche | Examinateur |
|---|---|---|
| La Haye | 29 août 2023 | Adami, Salah-Eddine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 4 274 071 A1**

Europäisches
Patentamt

European
Patent Office

Office européen
des brevets

# RAPPORT DE RECHERCHE EUROPEENNE

Numéro de la demande

EP 23 17 0984

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MOFFATT ROBERT A ET AL: "A Distributed, Phase-locked, Class-E, RF Generator with Automatic Zero-Voltage Switching", 2019 IEEE WIRELESS POWER TRANSFER CONFERENCE (WPTC), IEEE, 18 juin 2019 (2019-06-18), pages 390-394, XP033753467, DOI: 10.1109/WPTC45513.2019.9055602 * abrégé * * sections I-III; figure 3 * | 1-10 | |
| | ----- | | |
| A | US 2014/002208 A1 (KIM BONKEE [KR] ET AL) 2 janvier 2014 (2014-01-02) * abrégé * * alinéa [0008] – alinéa [0118]; figures 1-12 * | 1-10 | |
| | ----- | | |
| A | GU LEI ET AL: "High-Frequency Resonant Converter with Synchronous Rectification for High Conversion Ratio and Variable Load Operation", 2018 INTERNATIONAL POWER ELECTRONICS CONFERENCE (IPEC-NIIGATA 2018 –ECCE ASIA), IEEJ INDUSTRY APPLICATION SOCIETY, 20 mai 2018 (2018-05-20), pages 632-638, XP033428561, DOI: 10.23919/IPEC.2018.8507671 * abrégé * * sections I-V; figures 1-10 * | 1-10 | DOMAINES TECHNIQUES RECHERCHES (IPC) |
| | ----- | | |
| | -/-- | | |

Le présent rapport a été établi pour toutes les revendications

| Lieu de la recherche | Date d'achèvement de la recherche | Examinateur |
|---|---|---|
| La Haye | 29 août 2023 | Adami, Salah-Eddine |

EPO FORM 1503 03.82 (P04C02)

Europäisches
Patentamt

European
Patent Office

Office européen
des brevets

**RAPPORT DE RECHERCHE EUROPEENNE**

Numéro de la demande

**EP 23 17 0984**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GARCIA JOSE A ET AL: "Class-E Rectifiers and Power Converters: The Operation of the Class-E Topology as a Power Amplifier and a Rectifier with Very High Conversion Efficiencies", IEEE MICROWAVE MAGAZINE, IEEESERVICE CENTER, PISCATAWAY, NJ, US, vol. 19, no. 5, 1 juillet 2018 (2018-07-01), pages 67-78, XP011684563, ISSN: 1527-3342, DOI: 10.1109/MMM.2018.2821063 [extrait le 2018-05-31] * abrégé * * page 67 – page 77; figures 1-13 * | 1-10 | |
| A | US 2016/365795 A1 (MADSEN MICKEY P [DK] ET AL) 15 décembre 2016 (2016-12-15) * abrégé * * colonne 0009 – colonne 0057; figures 1-5 * | 1-10 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 29 août 2023 | Adami, Salah-Eddine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 17 0984

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-08-2023

| Document brevet cité au rapport de recherche | Date de publication | Membre(s) de la famille de brevet(s) | Date de publication |
|---|---|---|---|
| US 2022038030 A1 | 03-02-2022 | EP 3891877 A1 | 13-10-2021 |
| | | FR 3089719 A1 | 12-06-2020 |
| | | US 2022038030 A1 | 03-02-2022 |
| | | WO 2020115100 A1 | 11-06-2020 |
| US 2014002208 A1 | 02-01-2014 | EP 2651032 A2 | 16-10-2013 |
| | | JP 5674842 B2 | 25-02-2015 |
| | | JP 2013214740 A | 17-10-2013 |
| | | KR 20130112307 A | 14-10-2013 |
| | | US 2013257558 A1 | 03-10-2013 |
| | | US 2014002208 A1 | 02-01-2014 |
| US 2016365795 A1 | 15-12-2016 | CA 2935806 A1 | 03-09-2015 |
| | | CN 106063104 A | 26-10-2016 |
| | | EP 3111546 A1 | 04-01-2017 |
| | | MX 357520 B | 12-07-2018 |
| | | RU 2016130008 A | 28-03-2018 |
| | | TW 201607226 A | 16-02-2016 |
| | | UA 120844 C2 | 25-02-2020 |
| | | US 2016365795 A1 | 15-12-2016 |
| | | WO 2015128397 A1 | 03-09-2015 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2106069

**Littérature non-brevet citée dans la description**

- **N. O. SOKAL ; A. D. SOKAL.** Class E-A new class of high-efficiency tuned single-ended switching power amplifiers. *IEEE Journal of Solid-State Circuits,* Juin 1975, vol. 10 (3), 168-176
- **J. M. RIVAS ; Y. HAN ; O. LEITERMANN ; A. SAGNERI ; D. J. PERREAULT.** A High-Frequency Resonant Inverter Topology with Low Voltage Stress. *2007 IEEE Power Electronics Specialists Conférence,* 2007, 2705-2717

- **DE V. MASSAVIE ; G.DESPESSE ; S. CARCOUET ; X. MAYNARD.** A new topology of resonant inverter including a piezoelectric component. *2021 25rd European Conférence on Power Electronics and Applications (EPE'21 ECCE Europe,* 2021, 1-10